# EUROPÄISCHE PATENTSCHRIFT

(11) **EP 0 811 837 B1**
(45) Veröffentlichungstag und Bekanntmachung des Hinweises auf die Patenterteilung: **14.12.2005**
(21) Anmeldenummer: 97108858.8
(22) Anmeldetag: 03.06.1997
(51) Int. Cl.: G01N 25/56

(54) **Verfahren und Vorrichtung zum Ermitteln insbesondere des Feuchtgehalts eines Messgasstroms**
Method and apparatus for determining in particular the humidity of a gas
Méthode et appareil pour la détermination en particulier de l'humidité d'un gaz

(30) Priorität: 05.06.1996 DE 19622530
(43) Veröffentlichungstag der Anmeldung: 10.12.1997
(73) Patentinhaber: Testo AG, 75853 Lenzkirch (DE)
(72) Erfinder: Springmann, Thomas, 79102 Freiburg (DE); Münch, Reinhold, 79100 Freiburg (DE)
(74) Vertreter: Patentanwälte Westphal, Mussgnug & Partner

(56) Entgegenhaltungen:
- EP-A- 0 541 495
- DE-C- 3 224 506
- US-A- 4 877 329

## Beschreibung

Die Erfindung betrifft ein Verfahren zum Ermitteln der Enthalpiedifferenz, die beim Abkühlen eines mit Wasserdampf beladenen Gasstroms auf eine Temperatur unterhalb der Taupunkttemperatur entsteht, insbesondere zum Ermitteln dessen Wasserdampfgehalts gemäß Anspruch 1, sowie eine hierzu geeignete Vorrichtung gemäß Anspruch 8.

Das Ermitteln der Enthalpiedifferenz eines mit Wasserdampf beladenen Gasstroms, welche beim Abkühlen auf eine Temperatur unterhalb der Taupunkttemperatur entsteht, ist zunächst eine grundlegende physikalische Meßaufgabe, die es beispielsweise gestattet, durch an sich bekannte physikalische Beziehungen den Wasserdampfgehalt eines Gasstroms zu bestimmen. Große technische Bedeutung hat diese Messung beispielsweise in der Prozeßgas- und Immissionsmeßtechnik, wo neben einer Reihe weiterer Bestandteile der Wasserdampf- (Feuchte-) Gehalt in gasförmigen Medien, wie beispielsweise in Rauchgas, zu ermitteln ist.

Ein weiteres konkretes Anwendungsfeld ist in der DE 32 24 506 C1, von der die Erfindung ausgeht, die Ermittlung der Wasserdampfkonzentration in der Abluft von Trocknern genannt. Hiernach ist es bekannt, eine Meßgasprobe einem Gaskühler mit einem elektrischen Kühlelement zuzuführen und darin nährungsweise den gesamten Wasserdampf auszukondensieren. Die Leistung des elektrischen Kühlelements ist hierbei so bemessen, daß der Meßgasstrom unter allen Umständen unter die Taupunkttemperatur abgekühlt werden kann, um das vollständige Auskondensieren auch bei hohem Feuchtegehalt und hoher Gastemperatur sicherzustellen. Die Ermittlung des Feuchtegehalts geschieht dadurch, daß dem Gaskühler ein bekannter, konstanter Volumenstrom an Meßgas zugeführt wird. Im Gaskühler wird der Meßgasstrom soweit abgekühlt, daß alle bei der vorgewählten Temperatur, beispielsweise bei +5°C kondensierbaren Gase auskondensieren. Am Gasaustritt des Gaskühlers ist ein Gasdurchflußmesser angebracht, der den Durchfluß der nunmehr trockenen Meßgasprobe ermittelt. Somit kann durch Bilanzieren der ursprüngliche Gehalt an Wasserdampf berechnet werden.

Nachteilig bei dieser Messung ist der verhältnismäßig hohe technische Aufwand, der zwar bei stationären Anwendungen, wie im vorliegenden Fall der Prozeßüberwachung eines Tabak-Luftstromtrockners hinnehmbar ist, nicht jedoch für eine Reihe wichtiger Einsatzzwecke, beispielsweise bei tragbaren Rauchgas-Analysegeräten, wie sie zur turnusmäßigen Überwachung von Heizungsanlagen in Wohnhäusern benötigt werden.

Der vorliegenden Erfindung lag deshalb das Problem zugrunde, ein Verfahren und eine Vorrichtung der eingangs genannten Art zur Verfügung zu stellen, welche die genannten Meßaufgaben mit möglichst einfachen Mitteln zuverlässig lösen. Insbesondere im Hinblick auf mobile Einsatzzwecke sollte eine Vorrichtung geschaffen werden, die äußerst kompakt und leicht gebaut ist, um als Bestandteil einer transportablen Meßgas-Analyseeinheit verwendet zu werden.

Gelöst wird dieses Problem durch ein Verfahren, welches die Merkmale des Anspruchs 1 aufweist. Vorteilhafte Verfahrensvarianten sind in den Ansprüchen 2 bis 7 angegeben.

Das Problem wird weiterhin durch eine Vorrichtung gelöst, die die Merkmale des Anspruchs 8 besitzt. Vorteilhafte Ausführungsformen der Vorrichtung sind durch die Ansprüche 9 bis 13 angegeben.

Die Erfindung beruht auf der Grundidee, die elektrische Leistungsaufnahme des Kühlelements zu erfassen und in die Berechnung der Enthalpiedifferenz bzw. des Wasserdampfgehalts mit einzubeziehen. So wird die Leistungsaufnahme mit Zustands- und Durchflußkenngrößen am Gaseintritt und am Gasaustritt des Gaskühlers verknüpft.

Das erfindungsgemäße Verfahren eignet sich nicht nur für Einzelmessungen, sondern insbesondere auch für Messungen über einen längeren Zeitraum bis hin zur permanenten Überwachung. Hierzu werden zeitliche Änderungen der Zustands- und Durchflußkenngrößen des Gasstroms und/oder der elektischen Leistungsaufnahme des Kühlelements kontinuierlich erfaßt und ausgewertet.

Zum Ermitteln der zeitlichen Änderungen (Schwankungen) der Enthalpiedifferenz bzw. des Wasserdampfgehalts sind zwei Alternativen besonders vorteilhaft.

Bei einer ersten Alternative wird die Taupunkttemperatur am Gasaustritt konstant gehalten, und zwar auf einem Wert unterhalb der Temperatur des Gasstroms. Die zum Konstanthalten der Temperatur erforderliche elektrische Leistungsaufnahme des Kühlelements wird erfaßt und deren zeitliche Änderung (Schwankung) unmittelbar mit der zeitlichen Änderung der Enthalpiedifferenz bzw. des Wasserdampfgehalts korreliert.

Gemäß einer zweiten Variante wird die elektrische Leistungsaufnahme des Kühlelements konstantgehalten. Eine Änderung der Enthalpiedifferenz bzw. des Wasserdampfgehalts bewirkt in diesem Fall eine entsprechende Änderung der Temperatur am Gasaustritt, die hierfür kontinuierlich erfaßt wird. Es versteht sich von selbst, daß die Temperatur am Gasaustritt in jedem Fall unterhalb der Taupunkttemperatur des Gasstromes liegen muß. Es ist deshalb erforderlich, über die elektrische Leistungsaufnahme des Kühlelements die Temperatur am Gasaustritt zu Beginn der Messung soweit abzusenken, daß auch im Extremfall, d.h. am oberen Ende des vorgesehenen Meßbereichs die Temperatur am Gasaustritt im sicheren Abstand zur Taupunkttemperatur bleibt.

Zum Kalibrieren (Abgleichen) wird in den Gaskühler eine definierte Wärmemenge eingebracht, die einer definierten Enthalpiedifferenz bzw. einem definierten Wasserdampfgehalt entspricht. Die hierdurch ausgelöste Reaktion des Gaskühlers wird erfaßt und ausgewertet. Auf diese Weise wird für diesen Kalibrierpunkt eine Art Systemfaktor ermittelt, der die systembedingten Eigenheiten, wie beispielsweise Wärmeübergänge, Wärmeverluste, Wirkungsgrad des Kühlelements, Alterungseffekte und dergleichen berücksichtigt. Durch ein mehrfach aufeinanderfolgendes Wiederholen des Kalibriervorgangs für jeweils unterschiedliche definierte Wärmemengen kann eine Kennlinie aufgebaut werden. Die Zahl der erforderlichen Kalibrierpunkte hängt im wesentlichen von der Art der Kennlinie ab. Im Falle eines linearen Verhaltens sind zwei Messungen mit unterschiedlicher Wärmemenge ausreichend, wobei sich die Genauigkeit durch weitere Kalibriermessungen erhöhen läßt. Im Extremfall kann auch ein Kalibrierpunkt ausreichend sein.

Zum Einbringen der Wärmemenge können Gasströme mit exakt bekannten Zustandsgrößen, insbesondere mit bekannten Enthalpie- bzw. Wasserdampfgehalten verwendet werden, mit denen der Gaskühler beschickt wird. Auf diese Weise ist ein äußerst exakter Kalibriervorgang möglich.

Eine besonders bevorzugte Verfahrensvariante besteht darin, die Wärmemenge durch ein im Gaskühler integriertes Heizelement einzubringen. Damit gelingt die Simmulation von Enthalpiedifferenzen bzw. Wasserdampfgehalten, ohne daß es irgendwelcher Kalibriergasströme bedürfte. Das Kalibrieren kann somit intern erfolgen, prinzipiell auch während Langzeitmessungen, wozu nur kurzfristige Unterbrechungen der Messungen erforderlich sind.

Eine hierzu geeignete Vorrichtung kann aus einem an sich bekannten Gaskühler mit einem elektrischen Kühlelement dadurch aufgebaut werden, daß Meßeinrichtungen im Bereich des Gaseintritts und des Gasaustritts zum Erfassen von Zustandsgrößen und Durchflußkenngrößen des Gasstroms, beispielsweise der Temperatur, des Drucks und des Volumenstroms, vorgesehen werden.

Darüber hinaus sind Meßeinrichtungen zum Erfassen der elektrischen Leistungsaufnahme des Kühlelements erforderlich, sofern diese nicht ohnehin bereits vorhanden sind. Schließlich muß eine Auswerteeinrichtung vorhanden sein, in der die elektrische Leistungsaufnahme des Kühlelements mit den Zustandsgrößen und den Durchflußkenngrößen des Gasstroms am Gasaustritt und am Gaseintritt miteinander in Beziehung gesetzt werden. Als Auswerteeinrichtung dient in der Regel eine Mikroprozessoreinheit.

Von Vorteil ist weiterhin, daß in den meisten der hierfür vorgesehenen Anwendungsfälle ein derartiger Gaskühler ohnehin vorgesehen ist, der als Kondensatabscheider das Meßgas aufbereiten muß. Er übernimmt damit ohne besonderen zusätzlichen Aufwand eine weitere Meßaufgabe, nämlich das Ermitteln der

Enthalpiedifferenz bzw. des Wasserdampfgehalts des Meßgasstroms. Bevorzugt wird als Kühlelement ein Peltier-Element verwendet, welches ohne bewegliche Bauteile auskommt und deshalb besonders wartungsarm und unempfindlich gegen Verschmutzung ist. Dieser Aspekt ist insbesondere bei der Rauchgasanalyse von Bedeutung, da die dort vorhandenen Ruß- und Staubpartikel eine hohe Verschmutzung verursachen. Weiterhin sind im Abgas aggressive Bestandteile, beispielsweise Chlor oder Fluor vorhanden, gegen die ein ausreichender Schutz vorzusehen ist. Schließlich besitzt das Meßgas in der Regel eine hohe Temperatur, die teilweise bis zu 1500°C betragen kann. Hier zeigt sich, daß die erfindungsgemäße Vorrichtung erhebliche Vorteile gegenüber anderen Konzepten aufweist und aufgrund des einfachen und robusten Aufbaus die Messung auch unter Extrembedingungen zuläßt.

Bevorzugt ist im Gaskühler ein Heizelement integriert, um einen einfachen Kalibriervorgang zu ermöglichen. Hierfür eignet sich insbesondere eine Heizpatrone, die aufgrund ihres kompakten Aufbaus besonders einfach in den Gaskühler zu integrieren ist.

Für die Praxis hat es sich als vorteilhaft erwiesen, die Heizleistung des Heizelements in mehreren Stufen einstellbar zu gestalten, wobei jede Stufe eine exakte reproduzierbare Heizleistung repräsentiert.

Für den konkreten Anwendungsfall einer tragbaren Rauchgasanalyseeinheit hat es sich als vorteilhaft erwiesen, eine Heizpatrone zu verwenden, deren Leistung im Bereich von 1,0 W bis 15 W in 5 Stufen einstellbar ist. Damit können Taupunkttemperaturen im Gaskühler zwischen ca. 10°C und 80°C simuliert werden. Der Selbstabgleich des Systems ist mit minimalem Aufwand möglich.

Die Erfindung wird nachstehend näher anhand der in den Figuren schematisch dargestellten Ausführungsbeispiele erläutert.

Es zeigen
- Figur 1:: den allgemeinen Aufbau der Vorrichtung und
- Figur 2:: einen erfindungsgemäß modifizierten Gaskühler.

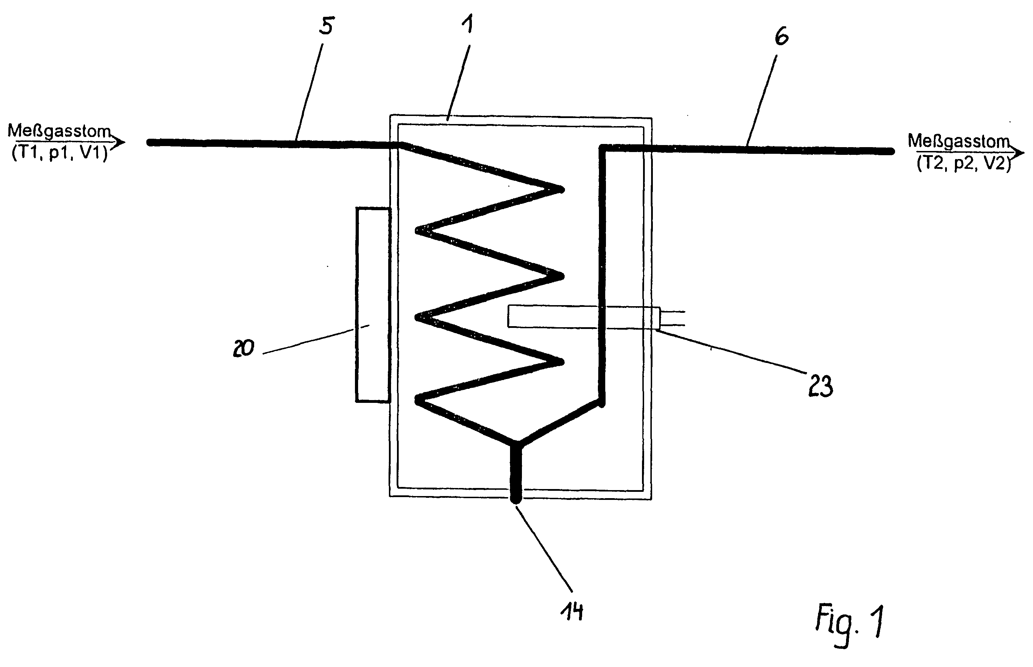

Gemäß Figur 1 wird ein kontinuierlich entnommener Meßgasstrom über ein Gaszuführungsrohr 5 einem Gaskühler 1 zugeführt. Im Bereich des Gaszuführungsrohres 5 werden in nicht näher dargestellter Art und Weise Zustandsgrößen und Durchflußkenngrößen des Meßgasstroms, beispielsweise die Temperatur T1, der Druck P1 oder der Volumenstrom V1, erfaßt und einer nicht näher dargestellten Auswerteeinheit zugeführt.

Der Meßgasstrom wird durch den Gaskühler 1 hindurchgeleitet und abgekühlt. Hierzu ist im Gaskühler 1 ein Peltierelement 20 vorgesehen, welches ebenfalls mit der Auswerteeinheit verbunden ist und dessen elektrische Leistungsaufnahme ebenfalls erfaßt und ausgewertet wird.

Bei dem Durchtritt durch den Gaskühler 1 wird der Meßgasstrom auf eine Temperatur abgekühlt, die unterhalb der Taupunkttemperatur liegt. Hierdurch kondensiert der Wasserdampf zu Wasser, welches den Gaskühler 1 über eine Kondensatleitung 14 verläßt. Das Meßgas verläßt den Gaskühler 1 über das Gasabführungsrohr 6, wobei wiederum durch nicht näher gezeichnete Meßeinrichtungen Zustands- und Durchflußkenngrößen, beispielsweise die Temperatur T2, der Druck P2 oder der Volumenstrom V2, erfaßt und der Auswerteeinrichtung zugeleitet werden.

Das Peltierelement 20 wird so geregelt, daß die Temperatur auf einem konstanten Niveau gehalten wird. Die aus den Zustands- und Durchflußkenngrößen in der Auswerteeinrichtung ermittelte Enthalpiedifferenz bzw. der ermittelte Wasserdampfgehalt, kann Schwankungen unterliegen. Für den eingangs beschriebenen Fall, daß die Temperatur im Gasaustritt konstant gehalten wird, äußert sich dies in einer zeitlichen Änderung der erforderlichen Kühlleistung.

Zum Kalibrieren ist im Gaskühler 1 ein Heizelement in Form einer Heizpatrone 23 integriert. Zum Kalibrieren wird der Meßgasstrom unterbrochen und über die Heizpatrone 23 ein definierter Wärmeeintrag in den Gaskühler 1 eingespeist. Die komplette Kennlinie wird durch mehrere Abgleichpunkte erstellt.

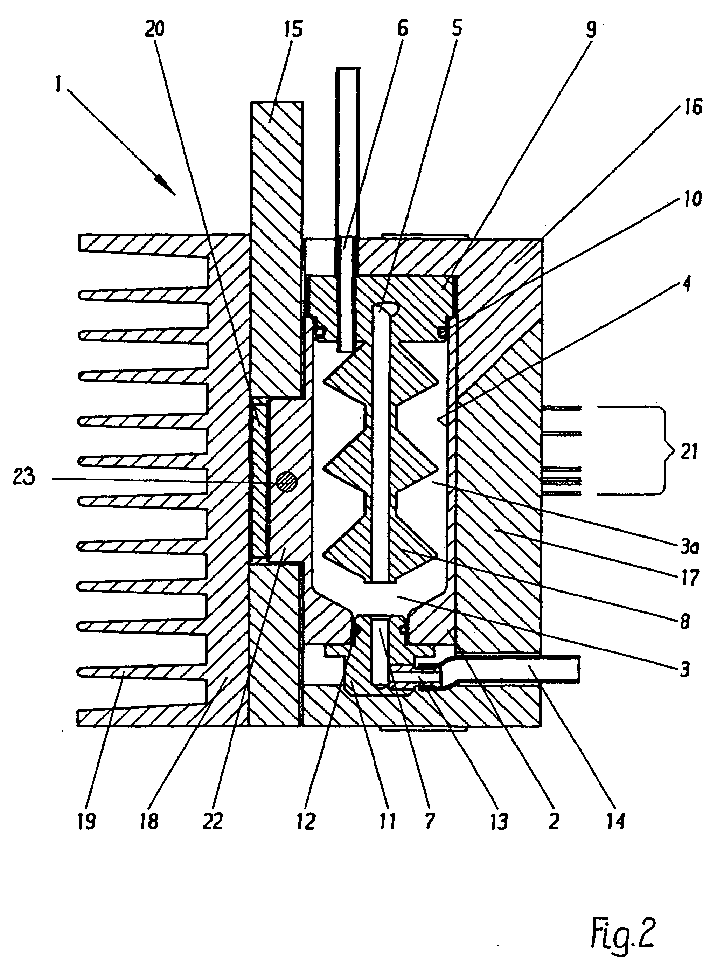

Die konkrete Realisierung einer erfindungsgemäßen Vorrichtung ist in Figur 2 dargestellt.

Ein Kühlblock 2 wird von außen über ein Peltierelement 20 gekühlt. Das Peltierelement 20 ist in an sich bekannter Weise über elektrischen Leitungen 21 mit einer Auswerteeinrichtung verbunden. Das Peltierelement 20 ist mit seiner Kaltseite im flächigen Kontakt mit dem Kühlblock 2 und mit seiner Warmseite im flächigen Kontakt mit einer Kühlschiene 18 verbunden. Zur optimalen Wärmeabfuhr an die Umgebung weist die Kühlschiene 18 eine Vielzahl von Lamellen 19 auf.

Der Kühlblock 2 hat die Grundform eines vertikal angeordneten Quaders mit rechteckigem Grundriß. Er weist eine vertikal verlaufende, zylinderförmige Ausnehmung 3 auf, die an ihrem unteren Ende in einen konusförmigen Abschnitt übergeht. Nach oben hin ist die Ausnehmung 3 durchgehend ausgeführt. Die Ausnehmung 3 ist mit einem Stopfen 9 nach oben hin verschlossen. Er weist einen elastisch nachgebenden Dichtring 10 auf, der für einen gasdichten Abschluß zwischen dem Stopfen 9 und dem Kühlblock 2 am oberen Ende der Ausnehmung 3 sorgt.

Durch den Stopfen 9 ist ein Gaszuführungsrohr 5 geführt, welches oben koaxial in die Ausnehmung 3 mündet. Es erstreckt sich bis in die Nähe des unteren Endes der Ausnehmung 3, so daß zwischen dem Gaszuführungsrohr 5 und der Wandung der Ausnehmung 3 ein Ringraum 3a entsteht. In dem Bereich des Ringraums 3a mündet oben ein Gasabführungsrohr 6. Das Gasabführungsrohr 6 ist ebenfalls im Stopfen 9 angeordnet. Es durchdringt den Stopfen 9 axial und überragt diesen nach außen zumindest soweit, daß ein hier nicht näher dargestelltes Anschlußorgan, beispielsweise in Form einer Schlauchkupplung, angebracht bzw. ein Schlauch unmittelbar aufgesteckt werden kann. Das Gaszuführungsrohr 5 ist im vorliegenden Fall im wesentlichen in radialer Richtung durch den Stopfen 9 hindurch nach außen geführt und überragt diesen in analoger Weise wie das Gasabführungsrohr 6, um den Anschluß an eine das Meßgas führende Zuleitung, beispielsweise an einen beheizbaren Meßgasschlauch mit Sondenrohr, zu ermöglichen.

Das Gaszuführungsrohr 5 trägt im Bereich der Ausnehmung mehrere Verwirbelungskörper 8. Diese haben die Form von Kegelstümpfen, die jeweils paarweise und koaxial zueinander angeordnet sind. Im dargestellten Ausführungsbeispiel sind drei solcher Doppel-Kegelstumpf-Anordnungen vorgesehen. Dadurch wird bewirkt, daß das im Ringraum 3a aufwärts strömende Gas keine geordnete Rohrströmung ausbilden kann. Durch die mehrfache Aufeinanderfolge von Querschnittsverengung und -erweiterung kommt es zu starken Verwirbelungen, die den Wärmeübergang zwischen Gas und Wandung erheblich verbessern.

Das Gaszuführungsrohr 5 einschließlich der daran angeordneten Verwirbelungskörper 8 ist mit dem Stopfen 9 fest verbunden. Damit können insbesondere die Oberflächen der Verwirbelungskörper 9 auf einfache Art und Weise gereinigt werden. Vorteilhafterweise werden die genannten Komponenten einstückig in Form eines Kunststoff-Spritzgießteils ausgeführt. Auch können der Verwirbelungskörper 8 und der Stopfen 9 als Drehteil gefertigt sein.

Besondere Bedeutung kommt der Beschichtung 4 der Wandung der Ausnehmung 3 zu. Durch eine geeignete Wahl des Materials und der Beschichtungsdicke ist sichergestellt, daß die Wandung des Kühlblocks 2 im gasbeaufschlagten Bereich zuverlässig geschützt wird, ohne den Wärmeübergang nennenswert zu beeinträchtigen. Als geeignetes Material für die Beschichtung 4 haben sich Kunststoffe, wie beispielsweise RILSAN^{R} oder TEFLON^{R} bewährt, die in einer Dicke von etwa 300 µ aufgetragen sind. Sie sind gegenüber den aggressiven Bestandteilen des Gases inert und besitzen eine ausreichende Haftfähigkeit, insbesondere im Bezug auf Aluminium, welches bevorzugt für die Herstellung des Kühlblocks 2 dient. Die Schichtdicke in der angegebenen Größenordnung gewährleistet bei den genannten und mit diesen vergleichbaren Werkstoffen eine ausgezeichnete Wärmeleitfähigkeit, so daß sich ein hervorragender Wirkungsgrad für den gesamten Gaskühler realisieren läßt.

Das untere Ende der Ausnehmung 3 ist konisch bzw. kegelförmig gestaltet, damit die an der Wandung herabfließenden Kondensattropfen zu der an der tiefsten Stelle der Ausnehmung 3 angeordneten Öffnung 7 abfließen können. Die Öffnung 7 dient zur Kondensatabführung und kann in an sich bekannter Weise gestaltet sein. In dem dargestellten Ausführungsbeispiel ist die Öffnung 7 nicht unmittelbar als Bohrung im Kühlblock 2 ausgeführt, sondern im Form einer in einem Stopfen 11 angebrachten Bohrung. Am Stopfen 11 ist in radialer Richtung ein Stutzen 13 angebracht, der in die Bohrung mündet und die nach außen führenden Kondensatleitung 14 aufnimmt. Der Stopfen 11 ist mittels einer elastisch nachgebenden Dichtung 12 in einer korrespondierenden Öffnung des Kühlblocks 2 angebracht.

Der Kühlblock 2 ist im wesentlichen vollständig von einem Isoliermantel umgeben, der hier aus drei Einzelteilen besteht. Eine Trennwand 15 trennt den Kühlblock 2 von der Kühlschiene 18. Die Trennwand 15 weist im Bereich des Peltierelements 20 eine Ausnehmung auf, in welcher ein absatzartiger Vorsprung 22 des Kühlblocks 2 hineinragt und die Kontaktfläche mit der Kaltseite des Peltierelements 20 bildet.

Zwei weitere Isolierelemente umfassen den Kühlblock 2 an den übrigen Seiten. Das Unterteil 17 wird von der Kondensatleitung 19 und von den Anschlußleitungen 21 des Peltierelements 20 durchsetzt. Das Oberteil 16 ist so gestaltet, daß es leicht abgenommen werden kann, um den Stopfen 9 vom Kühlblock 2 zu Reinigungszwecken abnehmen zu können.

Der Isoliermantel 15, 16, 17 verbessert nochmals den Wirkungsgrad des Gaskühlers, da er den Wärmeübergang vom Kühlblock 2 zur Umgebung weitgehend unterbindet.

Im Inneren des Gaskühlers 1 ist eine Heizpatrone 23 angeordnet, die dem vorstehend näher beschriebenen Kalibriervorgang dient.

Aus dem vorstehenden ergibt sich, daß ein an sich handelsüblicher Gaskühler durch den Einbau eines ebenfalls handelsüblichen Heizelements zur Ermittlung insbesonderes des Feuchtegehaltes des Meßgases verwendet werden kann. Die herfür erforderlichen Meßeinrichtungen im Bereich des Gaseintritts und Gasaustritts sind übliche Sensoren, die sich ohne weiteres in den genannten Bereichen anbringen lassen. Auf deren explizite Darstellung und Beschreibung kann deshalb an dieser Stelle verzichtet werden.

### Bezugszeichenliste

- 1.: Gaskühler
- 2.: Kühlblock (Kühlelement)
- 3.: Aussparung
- 3a: Ringraum
- 4.: Beschichtung
- 5.: Gaszuführungsrohr (Gaseintritt)
- 6.: Gasabführungsrohr (Gasaustritt)
- 7.: Öffnung
- 8.: Verwirbelungskörper
- 9.: Stopfen
- 10.: Dichtung
- 11.: Stopfen
- 12.: Dichtung
- 13.: Stutzen
- 14.: Kondensatleitung
- 15.: Trennwand (Isolierung)
- 16.: Oberteil (Isolierung)
- 17.: Unterteil (Isolierung)
- 18.: Kühlschiene
- 19.: Lamelle
- 20.: Peltierelement
- 21.: Elektrische Leitung
- 22.: Vorsprung
- 23.: Heizpatrone (Heizelement)

## Patentansprüche

1. Verfahren zum Ermitteln der Enthalpiedifferenz, die beim Abkühlen eines mit Wasserdampf beladenen Gasstroms auf eine Temperatur unterhalb der Taupunkttemperatur entsteht, insbesondere zum Ermitteln dessen Wasserdampfgehalts, unter Verwendung eines Gaskühlers (1) mit einem elektrischen Kühlelement (2), der im Bereich eines Gaseintritts (5) und eines Gasaustritts (6) mit Messeinrichtungen zum Erfassen von Zustandsgrößen und Durchflusskenngrößen des Gasstroms und zum Weiterleiten an eine Auswerteeinrichtung versehen ist, wobei die elektrische Leistungsaufnahme des Kühlelements (2) erfasst wird und in der Auswerteeinrichtung aus der elektrischen Leistungsaufnahme des Kühlelements (2), aus den Zustandsgrößen und aus den Durchflusskenngrößen des Gasstroms am Gaseintritt (5) und am Gasaustritt (6) des Gaskühlers die Enthalpiedifferenz bzw. der Wasserdampfgehalt berechnet wird.

2. Verfahren nach Anspruch 1, **dadurch gekennzeichnet, dass** zeitliche Änderung der Zustandsgrößen und Durchflusskenngrößen des Gasstroms und/oder der elektrischen Leistungsaufnahme des Kühlelements (2) erfasst und ausgewertet werden.

3. Verfahren nach Anspruch 2, **dadurch gekennzeichnet, dass** bei konstantgehaltener Temperatur (T2) am Gasaustritt (6), die unterhalb der Taupunkttemperatur des Gasstroms liegt, die zeitliche Änderung der elektrischen Leistungsaufnahme des Kühlelements (2) erfasst wird.

4. Verfahren nach Anspruch 2, **dadurch gekennzeichnet, dass** bei konstantgehaltener Leistungsaufnahme des Kühlelements (2) die zeitliche Änderung der Temperatur (T2) am Gasaustritt (6) erfasst wird.

5. Verfahren nach einem der vorstehenden Ansprüche, **dadurch gekennzeichnet, dass** zum Kalibieren mehrfach aufeinanderfolgend in den Gaskühler (1) eine definierte Wärmemenge jeweils unterschiedlicher Höhe, die einer definierten Enthalpiedifferenz bzw. einem definierten Wasserdampfgehalt entspricht, eingebracht und die hierdurch ausgelöste Reaktion des Gaskühlers (1), d.h. die erforderliche Leistungsaufnahme des Kühlelements (2) bzw. der Temperaturanstieg am Gausaustritt (6) erfasst und zu einer Kennlinie ausgewertet wird.

6. Verfahren nach Anspruch 5, **dadurch gekennzeichnet, dass** zum Kalibieren Gasströme mit exakt bekannten Zustandsgrößen, insbesondere mit bekannten Wasserdampfgehalten, verwendet werden.

7. Verfahren nach Anspruch 5, **dadurch gekennzeichnet, dass** die Wärmemenge durch ein im Gaskühler (1) integriertes Heizelement (23) erzeugt wird.

8. Vorrichtung zum Ermitteln der Enthalpiedifferenz, die beim Abkühlen eines mit Wasserdampf beladenen Gasstroms auf eine Temperatur unterhalb der Taupunkttemperatur entsteht, insbesondere zum Ermitteln dessen Wasserdampfgehalts, mit einem ein elektrisches Kühlelement (2) aufweisenden Gaskühler (1) sowie mit
- Messeinrichtung im Bereich eines Gaseintritts (5) und eines Gasaustritts (6) des Gaskühlers zum Erfassen von Zustandsgrößen und Durchflusskenngrößen des Gasstroms,
- Messeinrichtungen zum Erfassen der elektrischen Leistungsaufnahme des Kühlelements (2), und
- einer Auswerteeinrichtung, in der aus der elektrischen Leistungsaufnahme, aus den Zustandsgrößen und aus den Durchflusskenngrößen des Gasstroms am Gasaustritt (6) und am Gaseintritt (5) des Gaskühlers die Enthalpiedifferenz bzw. der Wasserdampfgehalt berechnet wird.

9. Vorrichtung nach Anspruch 8, **dadurch gekennzeichnet, dass** das Kühlelement (2) ein Peltierelement ist.

10. Vorrichtung nach Anspruch 8 oder 9, **gekennzeichnet durch** ein im Gaskühler (1) integriertes Heizelement (23).

11. Vorrichtung nach Anspruch 10, **dadurch gekennzeichnet, dass** das Heizelement (23) eine Heizpatrone ist.

12. Vorrichtung nach Anspruch 10 oder 11, **dadurch gekennzeichnet, dass** die Heizleistung des Heizelements (23) in mehreren Stufen einstellbar ist.

13. Vorrichtung nach Anspruch 12, **dadurch gekennzeichnet, dass** die Heizleistung, vorzugsweise in 5 Stufen, zwischen 1,0 W und 15 W einstellbar ist.

## Claims

1. A method for determining the difference in enthalpy that occurs when a gas stream loaded with water vapour is cooled to a temperature below the dew point temperature, in particular for determining its water vapour content, using a gas cooler (1) having an electrical cooling element (2), which in the vicinity of a gas inlet (5) and a gas outlet (6) is provided with measuring devices for recording state variables and through-flow parameters of the gas stream and for forwarding them to an evaluation device, wherein the electrical power consumption of the cooling element (2) is recorded and the difference in enthalpy or the water vapour content is calculated in the evaluation device from the electrical power consumption of the cooling element (2), from the state variables and from the through-flow parameters of the gas stream at the gas inlet (5) and at the gas outlet (6) of the gas cooler.

2. A method according to Claim 1,
**characterised in that** the periodic change of the state variables and through-flow parameters of the gas stream and/or of the electrical power consumption of the cooling element (2) are recorded and evaluated.

3. A method according to Claim 2,
**characterised in that** the periodic change in the electrical power consumption of the cooling element (2) is recorded with the temperature (T2), which is below the dew point temperature of the gas stream, being held constant at the gas outlet (6).

4. A method according to Claim 2,
**characterised in that** the periodic change in the temperature (T2) at the gas outlet (6) is recorded with the power consumption of the cooling element (2) held constant.

5. A method according to one of the preceding Claims,
**characterised in that** for calibration a defined quantity of heat, in each case of different amounts, which corresponds to a defined difference in enthalpy or a defined water vapour content, is introduced repeatedly and successively into the gas cooler (1) and the reaction of the gas cooler (1) triggered thereby, i.e. the required power consumption of the cooling element (2) or the rise in temperature at the gas outlet (6), is recorded and evaluated to provide a characteristic.

6. A method according to Claim 5,
**characterised in that** gas streams having exactly known state variables, in particular with known water vapour contents, are used for calibration.

7. A method according to Claim 5,
**characterised in that** the quantity of heat is generated by a heating element (23) integrated in the gas cooler (1).

8. A device for determining the difference in enthalpy which occurs when a gas stream loaded with water vapour is cooled to a temperature below its dew point temperature, in particular for determining its water vapour content, having a gas cooler (1) comprising an electrical cooling element (2) and also having
- a measuring device in the vicinity of a gas inlet (5) and a gas outlet (6) of the gas cooler to record state variables and through-flow parameters of the gas stream,
- measuring devices for recording the electrical power consumption of the cooling element (2), and
- an evaluation device in which the difference in enthalpy or the water vapour content is calculated from the state variables and from the through-flow parameters of the gas stream at the gas outlet (6) and at the gas inlet (5) of the gas cooler.

9. A device according to Claim 8,
**characterised in that** the cooling element is a Peltier element.

10. A device according to Claim 8 or 9,
**characterised by** a heating element (23) integrated in the gas cooler (1).

11. A device according to Claim 10,
**characterised in that** the heating element (23) is a heating cartridge.

12. A device according to Claim 10 or 11,
**characterised in that** the heating power of the heating element (23) can be adjusted in several stages.

13. A device according to Claim 12,
**characterised in that** the heating power can be adjusted between 1.0 W and 15 W, preferably in 5 stages.

## Revendications

1. Procédé pour la détermination de la différence d'enthalpie qui apparaît lors du refroidissement d'un courant de gaz chargé en vapeur d'eau à une température inférieure à la température du point de rosée, en particulier pour la détermination de sa teneur en vapeur d'eau, en utilisant un refroidisseur de gaz (1) comportant un élément de refroidissement électrique (2) qui est muni, au niveau d'une arrivée de gaz (5) et d'une sortie de gaz (6) de dispositifs de mesure pour détecter des variables d'état et des caractéristiques de débit du courant de gaz et les transmettre à un dispositif d'exploitation,
selon lequel
on détecte la puissance électrique absorbée de l'élément de refroidissement (2) et le dispositif d'exploitation calcule la différence d'enthalpie ou la teneur en vapeur d'eau, à partir de la puissance électrique absorbée de l'élément de refroidissement (2), des variables d'état et à partir des caractéristiques de débit du courant de gaz sur l'arrivée de gaz (5) et sur la sortie de gaz (6) du refroidisseur de gaz.

2. Procédé selon la revendication 1,
**caractérisé en ce qu'**
on détecte et on analyse la variation dans le temps des variables d'état et des caractéristiques de débit du courant de gaz et/ou de la puissance électrique absorbée de l'élément de refroidissement (2).

3. Procédé selon la revendication 2,
**caractérisé en ce qu'**
à une température maintenue constante (T2) sur la sortie de gaz (6), qui est inférieure à la température du point de rosée du courant de gaz, on détecte la variation dans le temps de la puissance électrique absorbée de l'élément de refroidissement (2).

4. Procédé selon la revendication 2,
**caractérisé en ce qu'**
à une puissance absorbée maintenue constante de l'élément de refroidissement (2), on détecte la variation dans le temps de la température (T2) sur la sortie de gaz (6).

5. Procédé selon l'une quelconque des revendications précédentes,
**caractérisé en ce que**
pour le calibrage, on introduit à plusieurs reprises successives dans le refroidisseur de gaz (1) une quantité de chaleur définie à chaque fois différente et qui correspond à une différence d'enthalpie ou à une teneur en vapeur d'eau définie, et on détecte la réaction du refroidisseur de gaz (1) ainsi déclenchée, autrement dit la puissance absorbée nécessaire de l'élément de refroidissement (2), ou de la montée de la température sur la sortie de gaz (6), et on l'analyse pour créer une courbe caractéristique.

6. Procédé selon la revendication 5,
**caractérisé en ce que**
pour le calibrage, on utilise des courants de gaz ayant des variables d'état connues avec précision, en particulier ayant des teneurs en vapeur d'eau connues.

7. Procédé selon la revendication 5,
**caractérisé en ce que**
la quantité de chaleur est produite par un élément de chauffage (23) intégré dans le refroidisseur de gaz (1).

8. Dispositif pour la détermination de la différence d'enthalpie qui apparaît lors du refroidissement d'un courant de gaz chargé en vapeur d'eau à une température inférieure à la température du point de rosée, en particulier pour déterminer sa teneur en vapeur d'eau, comportant
- un refroidisseur de gaz (1) présentant un élément de refroidissement électrique (2),
- un dispositif de mesure au niveau d'une arrivée de gaz (5) et d'une sortie de gaz (6) du refroidisseur de gaz pour détecter des variables d'état et des caractéristiques de débit du courant de gaz,
- des dispositifs de mesure pour détecter la puissance électrique absorbée de l'élément de refroidissement (2), et
- un dispositif d'exploitation qui calcule la différence d'enthalpie ou la teneur en vapeur d'eau à partir de la puissance électrique absorbée, à partir des variables d'état et à partir des caractéristiques de débit du courant de gaz sur la sortie de gaz (6) et sur l'arrivée de gaz (5) du refroidisseur de gaz.

9. Dispositif selon la revendication 8,
**caractérisé en ce que**
l'élément de refroidissement (2) est un élément Peltier.

10. Dispositif selon la revendication 8 ou 9,
**caractérisé par**
un élément de chauffage (23) intégré dans le refroidisseur de gaz (1).

11. Dispositif selon la revendication 10,
**caractérisé en ce que**
l'élément de chauffage (23) est une cartouche chauffante.

12. Dispositif selon la revendication 10 ou 11,
**caractérisé en ce que**
la puissance de chauffe de l'élément de chauffage (23) peut être réglée en plusieurs paliers.

13. Dispositif selon la revendication 12,
**caractérisé en ce que**
la puissance de chauffe peut être réglée, de préférence en 5 paliers, entre 1,0 W et 15 W.
